# EUROPEAN PATENT SPECIFICATION

(11) **EP 2 720 637 B1**
(45) Date of publication and mention of the grant of the patent: **18.04.2018**
(21) Application number: 12800737.4
(22) Date of filing: 14.06.2012
(51) Int. Cl.: A61M 5/315, B05C 17/01, B05C 17/005, A61C 9/00, A61C 5/62

(54) **DENTAL SYRINGE**
ZAHNMEDIZINISCHE SPRITZE
SERINGUE DENTAIRE

(30) Priority: 17.06.2011 AU 2011902376
(43) Date of publication of application: 23.04.2014
(73) Proprietor: Sdi Limited, Bayswater, VIC 3153 (AU)
(72) Inventor: CHEETHAM, Joshua James, Windsor, Victoria 3181 (AU); FARRAR, Paul James, Box Hill North, Victoria 3129 (AU)
(74) Representative: Minoja, Fabrizio
(86) International application number: PCT/AU2012/000683
(87) International publication number: WO 2012/171063

(56) References cited:
- US-A- 5 618 273
- US-A- 5 618 273
- US-A- 5 800 169
- US-A1- 2007 072 146
- US-A1- 2007 250 013
- US-A1- 2010 028 831
- US-A1- 2010 282 774
- US-B1- 6 319 002

## Description

### FIELD OF THE INVENTION

The present invention relates to a dental syringe.

### THE PRIOR ART

US 60319 002 B1 discloses a dental handpiece arranged to be coupled to a capsule containing a composite material and for delivering and/or retracting the composite material to and from the mouth of a patient. The handpiece includes an elongate tubular member having a hollow chamber for receiving a reversible electric motor, a battery for supplying electric power to the motor and a drive shaft coupled to the motor. The drive shaft is restrained from longitudinal movement but contains a threaded portion for engagement with a threaded bore of a longitudinally movable plunger. The plunger is arranged to force outward movement of the composite material from the reservoir of the capsule. A manually operated electric switch is preferably mounted in the wall of the handpiece with a portion extending internally and externally of the wall.

US 5 618 273 A discloses a syringe apparatus for delivering solid, yet pliable materials, such as dental composites. The syringe apparatus comprises an unthreaded barrel means for containing the material. The unthreaded barrel means has an inlet end, an outlet end, and an enlarged finger grip at the inlet end. The syringe apparatus also comprises means for slidably engaging the finger grip of the barrel means, the engaging means having a threaded throughbore. The syringe apparatus further comprises a plunger means for movement through the barrel means. The plunger means has a threaded portion that is complementary to the threaded throughbore of the engaging means, such that the plunger means may be advanced into the barrel means at the inlet end by applying an external rotational force to the plunger means relative to the barrel means, thereby effecting delivery of the material at the outlet end of the barrel means. Finally, the threaded throughbore of the engaging means and the threaded portion of the plunger means are configured such that the plunger means will automatically withdraw slightly from the barrel means when the external rotational force is removed from the plunger means, reducing the amount of pressure exerted by the plunger means on the material within the barrel means.

### SUMMARY OF THE INVENTION

The dental syringe of the present invention has the features of independent claim 1. Preferred embodiments of the invention are disclosed in the dependent claims.

In accordance with the present invention there is provided a dental syringe comprising an outer body having a first end and a second outer end, the outer body containing an elongated hollow section having mounted therein a non-axially rotatable elongated piston, an axially rotatable member being mounted at the first end of the hollow section, the piston containing an axially extending elongated recess which is internally threaded and having a closed end and an opposed open end, an externally threaded rod being connected to the axially rotatable member and being threadedly engaged with the recess contained in the piston, the arrangement being such that axial rotation of the rotatable member is able to cause the piston to move into the hollow section such that dental material contained in the hollow section between the piston and the second end is dispensed from the second outlet end of the outer body.

### DESCRIPTION OF THE DRAWINGS

The present invention will now be described, by way of example, with reference to the accompanying drawings, in which:
Figure 1a is a perspective view of a dental syringe in accordance with the present invention;
Figure 1b is a view similar to Figure 1a with a cap removed;
Figure 2 is a perspective view of the syringe of Figures 1a and 1b in disassembled condition;
Figure 3a is a longitudinal sectional exploded view similar to Figure 2 of the dental syringe of Figures 1 and 2;
Figure 3b is a longitudinal assembled sectional view of the dental syringe of Figure 3a;
Figure 3c is a view similar to Figure 3b showing the dental syringe in activated condition.

### DETAILED DESCRIPTION OF THE INVENTION

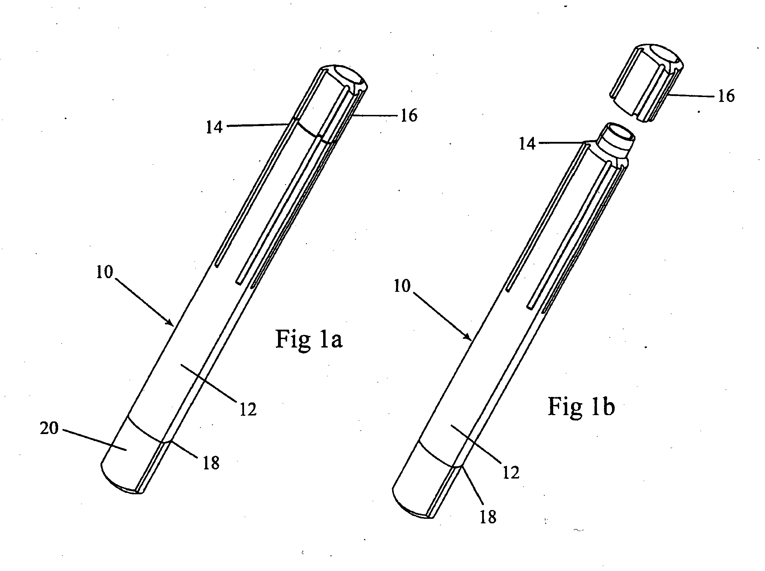

In Figures 1 a and 1b and 2 of the accompanying drawings there is shown a dental syringe 10 for dispensing dental material comprising an elongated body 12. The elongated body 12 has a first outlet end 14 having mounted thereto a removable end cap 16 and a second end 18 having mounted thereto an axially rotatable member 20.

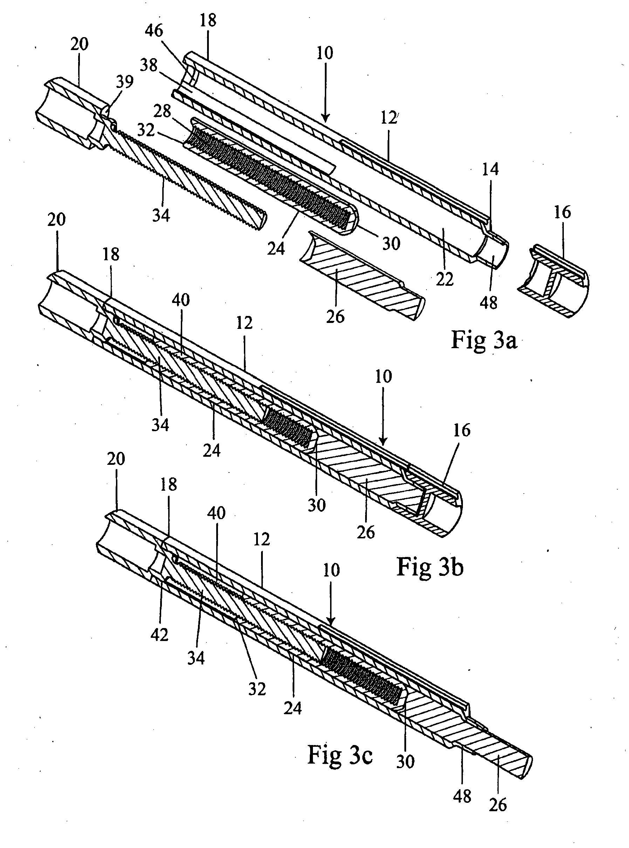

The elongated body 12 contains an elongated hollow section 22 best seen in Figure 3a, in which is mounted a non-axially rotatable elongated piston 24. During assembly the hollow section 22 is partially filled with dental material 26 at the outlet end 14 thereof adjacent the end cap 16. The piston 24 is then inserted into the hollow section 22 as shown in Figure 3b abutting the dental material 26.

As can be seen in Figure 3a the piston 24 contains an axially extending recess 28 which is internally threaded. The piston 24 also has a foremost closed end 30 and a trailing opposed open end 32.

The apparatus 10 further comprises an externally threaded rod 34 which is connected to the rotatable member 20.

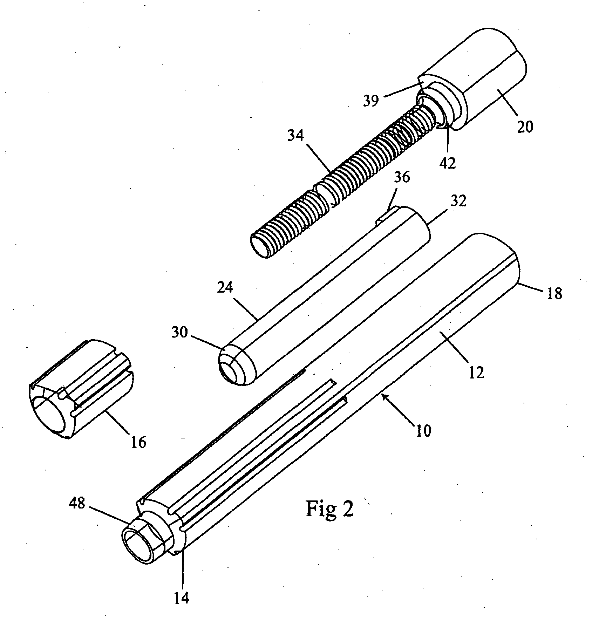

The piston 24 contains one or more external raised sections 36 (see Figure 2) which engage with an elongated internal recess 38 in the body 12 (see Figure 3a).

The externally threaded rod 34 is arranged to be threadedly engaged with the internally threaded recess 28 of the piston 24.

Subsequent to insertion of the piston 24 into the body 12, the threaded rod 34 is threadedly engaged with the piston 24. The rod 34 is rotated by rotation of the rotatable member 20 until an inner end 39 of rotatable member 20 engages with the end 18 of the body 12. In this position, as shown in Figure 3b, the inner end 30 of the piston 24 is in engagement with the dental material 26. Further, it can be seen that there is an annular gap 40 between the open end 32 of the piston 24 and the end 18 of the body 12.

Further, it can be seen in Figure 2 that the rotatable member 20 has a ring 42 mounted near the inner end 39 thereof adjacent to the outer body 12. The ring 42 engages with the end 18 of the outer body 12 in the position shown in Figure 3b so as to retain the rotatable member 20 in position. In fact, the ring 42 is shaped to engage with an internal circumferential groove 46 within the end 18 of the outer body 12 as shown in Figures 3a and 3b.

It can also be seen that the end 14 of the body 12 has an outlet portion 48 of reduced internal cross section compared to the remainder of the hollow section 22 of the body 12.

In use, the rotatable member 20 is axially rotated as the inner end 39 engages with the end 18 of the body 12.

Subsequently the rotatable member 20 may be rotated so as to cause the piston 24 to move further into the body 12 with the closed end 30 leading or to move towards the end 18 of the body 12 with the open end 32 leading. This is achieved by variation of the direction of rotation of the member 20 and the threaded engagement of the rod 34 with the recess 28.

To eject the dental material from the syringe 10, the removable end cap 16 has to be removed. Then the piston 24 is urged towards the end 14 by the above described rotation of the rod 34. As shown in Figure 3c this causes the dental material 26 to be dispensed through the outlet 48. The dental material 26 is in this way made available for use by a dentist.

The outlet 48 could alternatively have an outlet of the same size as the hollow section 22. The syringe 10 shown in the drawings is not circular in external shape but it could conveniently be made in a circular or a square shape if desired. Further, as shown in Figure 3, the closed end 30 of the piston 24 could be shaped such that it replicates the internal shape of the outlet 48, permitting the entire quantity of the dental material 26 to be dispensed.

## Claims

1. A dental syringe (10) comprising an outer body (12) having a first outlet end (14) and a second end (18), the outer body (12) containing an elongated hollow section (22) having mounted therein a non-axially rotatable elongated piston (24), an axially rotatable member (20) being mounted at the second end (18) of the outer body (12), the piston (24) containing an axially extending elongated recess (28) having a closed end (30) and an opposed open end (32), and an externally threaded axially rotatable rod (34) being connected to the axially rotatable member (20) for axial rotation therewith and being threadedly engaged with the elongated recess (28) contained in the piston (24), **characterized in that** the elongated recess of the piston is internally threaded for substantially the entire distance from the closed end (30) to the opposed open end (32), and **in that** said axially rotatable member (20) has a ring (42) mounted thereto adjacent the outer body (12) shaped to engage with an internal circumferential groove (46) within the end (18) of the outer body (12) so as to retain the rotatable member (20) in position, whereby axial rotation of the rotatable member (20) at the second end (18) of the outer body (12) causes the piston (24) to move into the hollow section (22) such that dental material (26) contained in the hollow section (22) between the closed end (30) of the piston (24) and the first outlet end (14) of the outer body (12) is dispensed from the first outlet end of the outer body.

2. A dental syringe according to claim 1, **characterized in that** the piston (24) is shaped to engage with the outer body (12) to inhibit axial rotation of the piston.

3. A dental syringe according to claim 2, **characterized in that** the piston (24) has at least one raised section (36) arranged to engage with a corresponding internal elongated recess (38) in the outer body (12).

4. A dental syringe according to any one of the preceding claims, **characterized in that** the first outlet end (14) has an outlet portion (48) of reduced internal cross sectional dimension.

5. A dental syringe according to any one of the preceding claims, **characterized in that** the first outlet end (14) is provided with a removable end cap (16).

## Patentansprüche

1. Dentalspritze (10) mit einem Außenkörper (12), der ein erstes Auslaufende (14) und ein zweites Ende (18) aufweist, wobei der Außenkörper (12) einen länglichen hohlen Abschnitt (22) enthält, in dem ein nicht axial drehbarer länglicher Kolben (24) gelagert ist, wobei ein axial drehbares Element (20) an dem zweiten Ende (18) des Außenkörpers (12) angebracht ist, wobei der Kolben (24) eine axial verlaufende längliche Aussparung (28) mit einem geschlossenen Ende (30) und ein gegenüberliegendes offenes Ende (32), und eine axial drehbare Stange (34) mit Außengewinde enthält, die mit dem axial drehbaren Element (20) zur axialen Drehung verbunden ist und mit der im Kolben (24) enthaltenen langgestreckten Aussparung (28) gewindeartig in Eingriff steht, **dadurch gekennzeichnet, dass** die langgestreckte Aussparung des Kolbens für im Wesentlichen den gesamten Abstand vom geschlossenen Ende (30) zum gegenüberliegenden offenen Ende (32) innengewunden ist, und dadurch dass das axial drehbare Element (20) einen Ring (42) aufweist, der an den Außenkörper (12) angrenzend daran befestigt ist, der so geformt ist, dass er mit einer inneren Umfangsnut (46) im Ende (18) des Außenkörpers (12) in Eingriff steht, um das drehbare Element (20) in Position zu halten, wobei eine axiale Drehung des drehbaren Elements (20) am zweiten Ende (18) des Außenkörpers (12) bewirkt, dass der Kolben (24) sich in den hohlen Abschnitt (22) bewegt, so dass Dentalmaterial (26) das in dem hohlen Abschnitt (22) zwischen dem geschlossenen Ende (30) des Kolbens (24) und dem ersten Austrittsende (14) des Außenkörpers (12) enthalten ist, von dem ersten Austrittsende des Außenkörpers abgegeben wird.

2. Dentalspritze nach Anspruch 1, **dadurch gekennzeichnet, dass** der Kolben (24) so geformt ist, dass er in den Außenkörper (12) eingreift, um eine axiale Drehung des Kolbens zu verhindern.

3. Dentalspritze nach Anspruch 2, **dadurch gekennzeichnet, dass** der Kolben (24) mindestens einen erhöhten Abschnitt (36) aufweist, der so angeordnet ist, dass er mit einer entsprechenden inneren langgestreckten Aussparung (38) in den äußeren Körper (12) eingreift.

4. Dentalspritze nach einem der vorstehenden Ansprüche, **dadurch gekennzeichnet, dass** das erste Austrittsende (14) einen Austrittsabschnitt (48) mit reduziertem Innenquerschnitt aufweist.

5. Dentalspritze nach einem der vorstehenden Ansprüche, **dadurch gekennzeichnet, dass** das erste Austrittsende (14) mit einer abnehmbaren Endkappe (16) versehen ist.

## Revendications

1. Seringue dentaire (10) comprenant un corps extérieur (12) présentant une première extrémité de sortie (14) et une seconde extrémité (18), le corps extérieur (12) comprenant une section creuse allongée (22) avec, monté à l'intérieur, un piston allongé (24) non-axialement rotatif, un élément (20) axialement rotatif étant monté au niveau de la seconde extrémité (18) du corps extérieur (12), le piston (24) comprenant un évidement allongé (28) s'étendant axialement qui présente une extrémité fermée (30) et une extrémité ouverte opposée (32), et une tige filetée vers l'extérieur (34) axialement rotative étant reliée à l'élément (20) axialement rotatif pour une rotation axiale avec celui-ci et étant engagée par filetage avec l'évidement allongé (28) compris dans le piston (24), **caractérisée en ce que** l'évidement allongé du piston est taraudé sur sensiblement toute la distance allant de l'extrémité fermée (30) jusqu'à l'extrémité ouverte opposée (32), et **en ce que** ledit élément (20) axialement rotatif présente une bague (42) montée sur celui-ci de manière adjacente au corps extérieur (12) formée pour venir en prise avec une rainure circonférentielle interne (46) à l'intérieur de l'extrémité (18) du corps extérieur (12) de manière à retenir en position l'élément (20) rotatif, dans lequel la rotation axiale de l'élément (20) rotatif au niveau de la seconde extrémité (18) du corps extérieur (12) amène le piston (24) à se déplacer dans la section creuse (22) de telle sorte que le matériau dentaire (26) contenu dans la section creuse (22) entre l'extrémité fermée (30) du piston (24) et la première extrémité de sortie (14) du corps extérieur (12) est distribué à partir de la première extrémité de sortie du corps extérieur.

2. Seringue dentaire selon la revendication 1, **caractérisée en ce que** le piston (24) est formé pour venir en prise avec le corps extérieur (12) afin d'empêcher la rotation axiale du piston.

3. Seringue dentaire selon la revendication 2, **caractérisée en ce que** le piston (24) présente au moins une section surélevée (36) agencée pour venir en prise avec un évidement allongé interne correspondant (38) dans le corps extérieur (12).

4. Seringue dentaire selon l'une quelconque des revendications précédentes, **caractérisée en ce que** la première extrémité de sortie (14) présente une partie de sortie (48) de dimensions internes réduites en coupe transversale.

5. Seringue dentaire selon l'une quelconque des revendications précédentes, **caractérisée en ce que** la première extrémité de sortie (14) est munie d'un capuchon d'extrémité amovible (16).
